(19) Europäisches Patentamt
European Patent Office
Office européen des brevets

(11) **EP 3 760 991 B1**

(12) **EUROPEAN PATENT SPECIFICATION**

(45) Date of publication and mention
of the grant of the patent:
**21.02.2024 Bulletin 2024/08**

(21) Application number: **19761311.0**

(22) Date of filing: **01.03.2019**

(51) International Patent Classification (IPC):
*G01J 3/36* (2006.01)    *G01J 5/00* (2022.01)
*G01J 3/02* (2006.01)    *G01J 3/28* (2006.01)

(52) Cooperative Patent Classification (CPC):
**G01J 5/0044; G01J 3/0289; G01J 3/2803;
G01J 3/36;** G01J 2005/0077

(86) International application number:
**PCT/JP2019/007983**

(87) International publication number:
**WO 2019/168141 (06.09.2019 Gazette 2019/36)**

(54) **SPECTROSCOPIC CHARACTERISTIC MEASUREMENT DEVICE, SPECTROSCOPIC CHARACTERISTIC MEASUREMENT METHOD, AND FURNACE CONTROL METHOD**

VORRICHTUNG ZUR MESSUNG SPEKTROSKOPISCHER EIGENSCHAFTEN, VERFAHREN ZUR MESSUNG SPEKTROSKOPISCHER EIGENSCHAFTEN SOWIE OFENSTEUERUNGSVORRICHTUNG

DISPOSITIF DE MESURE DE CARACTÉRISTIQUE SPECTROSCOPIQUE, PROCÉDÉ DE MESURE DE CARACTÉRISTIQUE SPECTROSCOPIQUE ET PROCÉDÉ DE COMMANDE DE FOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2018 JP 2018037165**

(43) Date of publication of application:
**06.01.2021 Bulletin 2021/01**

(73) Proprietor: **JFE Steel Corporation
Tokyo 100-0011 (JP)**

(72) Inventors:
• **KODAMA, Toshifumi
Tokyo 100-0011 (JP)**
• **AMANO, Shota
Tokyo 100-0011 (JP)**
• **TAKAHASHI, Yukio
Tokyo 100-0011 (JP)**

(74) Representative: **Hoffmann Eitle
Patent- und Rechtsanwälte PartmbB
Arabellastraße 30
81925 München (DE)**

(56) References cited:
WO-A1-2017/093431    JP-A- 2001 027 607
JP-A- 2005 315 779    JP-A- 2008 286 584
JP-A- 2009 068 995    JP-A- 2011 220 700
JP-A- 2015 010 910    JP-A- 2015 034 707
JP-A- 2015 072 713    JP-A- 2016 145 405
JP-A- 2016 156 777    JP-A- 2017 522 666
JP-A- 2018 029 251    US-A1- 2009 065 695
US-A1- 2012 002 035

## Description

Field

The present invention relates to a spectral characteristics measuring apparatus, a spectral characteristics measuring method, and a furnace control method.

Background

Techniques have been known for spectroscopic measurement using elements, for example, prisms, diffraction gratings, and variable filters, as a measure to quantify features of colors of an object. Additionally, imaging spectroscopy or multispectral imaging techniques by which this spectroscopic measurement is conducted closely on subdivided areas of the object have been developed on the basis of several principles, and have been commercially available in recent years. Specifically, a method of embedding, in an imaging system, a variable filter that is able to continuously change transmission characteristics (see Patent Literature 1) and a method of equivalently acquiring a plurality of spectral images at the same time by affixing, to pixels of an area sensor camera, filter membranes having different transmission characteristics from each other in a mosaic pattern (see Non Patent Literature 1) have been known.

The method described in Patent Literature 1, however, has the problem that spectral characteristics of an object that is not stationary in terms of time, for example, a mobile object, cannot be measured because data is acquired at different timings for different wavelengths. The method described in Non Patent Literature 1 also has the problem that an increase in the number of wavelengths to be observed lowers the resolution of an image, which makes it difficult to acquire a detailed spectral distribution of a wide area of an object.

Contrarily, an imaging spectroscope (see Non Patent Literature 2) has been proposed that combines a diffraction grating with an area sensor camera. By using the imaging spectroscope described in Non Patent Literature 2, detailed spectral characteristics of a linear region of an object can be acquired. The imaging spectroscope described in Non Patent Literature 2 is able to measure with measurement resolutions for a unidirectional field of view, more specifically, a resolution and wavelength resolutions within a range of measurement wavelength at a high resolution of equal to or greater than 1000, and has been used in a close inspection of the density and colors of printed matter, as disclosed in Patent Literature 2, and in recent years, in an analysis of vegetation patterns in forests and cultivated fields, for example.

Citation List

Patent Literature

Patent Literature 1: Japanese Patent Application Laid-open No. 2008-139062
Patent Literature 2: Japanese Patent Application Laid-open No. 2000-356552
Non Patent Literature 1: ARGO CORPORATION, "the hyperspectral camera equipped with a spectral filter", [online], searched on January 15, 2018, the Internet <URL: https://www.argocorp.com/cam/special/IM-EC/IMEC_snapshot.htm I>
Non Patent Literature 2: Daitron Co., Ltd., "the imaging spectroscope, ImSpector", [online], searched on January 15, 2018, the Internet <URL:http://www.daitron.co.jp/products/category/?c=zoom&pk=1942& sw=1>. In addition, there are known from US 2009/0065695 A1 and WO 2017/093431 A1, an infrared camera for locating a target using at least one shaped light source and, respectively, a method of hyperspectral measurement.

However, the respective teachings are not concerned with furnace control.

Summary

Technical Problem

However, the measuring field of view of the imaging spectroscope described in Non Patent Literature 2 is one line (one-dimensional), which makes it difficult to associate the position of the object with the measuring field of view in a case in which an object of large manufacturing equipment or an object in a manufacturing state is measured from a distance. Specifically, if the object moves in a direction orthogonal to the one-dimensional line direction, which is the measuring field of view of the imaging spectroscope, the object instantly falls outside the measuring field of view, thereby being unmeasurable. In this manner, every time the object falls outside the measuring field of view of the imaging spectroscope, readjustments need to be made to the measuring field of view of the imaging spectroscope and the position of the object. In order to solve such a problem, accurate positioning of the object and the measuring apparatus is conceivable, but practically, the object moves or the fixed state of the measuring apparatus changes, for example, so that the positional relation between the measuring apparatus and the object changes, which makes it difficult to stably measure spectral characteristics of the object.

The present invention is made in view of the problem described above, and it is an object of the present invention to provide a spectral characteristics measuring apparatus and a spectral characteristics measuring method that are able to stably measure spectral characteristics of the object, even in a case in which the positional relation to an object changes, by accurately associating the position of the object with the measuring field of view. Additionally, it is another object of the present invention to provide a furnace control method that is able to stably control a furnace to a desired state.

Solution to Problem

The mentioned problems are addressed and solved by the subject-matter of the sole claim.

Advantageous Effects of Invention

With the spectral characteristics measuring apparatus and the spectral characteristics measuring method according to the present invention, even in a case in which the positional relation to an object is changed, the position of the object is accurately associated with the measuring field of view, and spectral characteristics of the object can be stably measured. Additionally, with the furnace control method according to the present invention, a furnace can be stably controlled to a desired state.

Brief Description of Drawings

FIG. 1 is a schematic diagram illustrating a structure of a spectral characteristics measuring apparatus according to an embodiment of the present invention.

FIG. 2 is a schematic diagram illustrating the relation between the width of a measuring field of view of an imaging spectral device and the width of an imaging field of view of a two-dimensional imaging device in a direction of the measuring field of view of the imaging spectral device.

FIG. 3 is a diagram illustrating a captured image obtained by the two-dimensional imaging device and spectral intensity measured by the imaging spectral device.

FIG. 4 is a diagram illustrating a captured image obtained by the two-dimensional imaging device and spectral intensity measured by the imaging spectral device.

FIG. 5 is a diagram illustrating a captured image obtained by the two-dimensional imaging device and spectral intensity measured by the imaging spectral device.

Description of Embodiments

A structure of a spectral characteristics measuring apparatus according to an embodiment of the present invention will be described below with reference to the drawings.

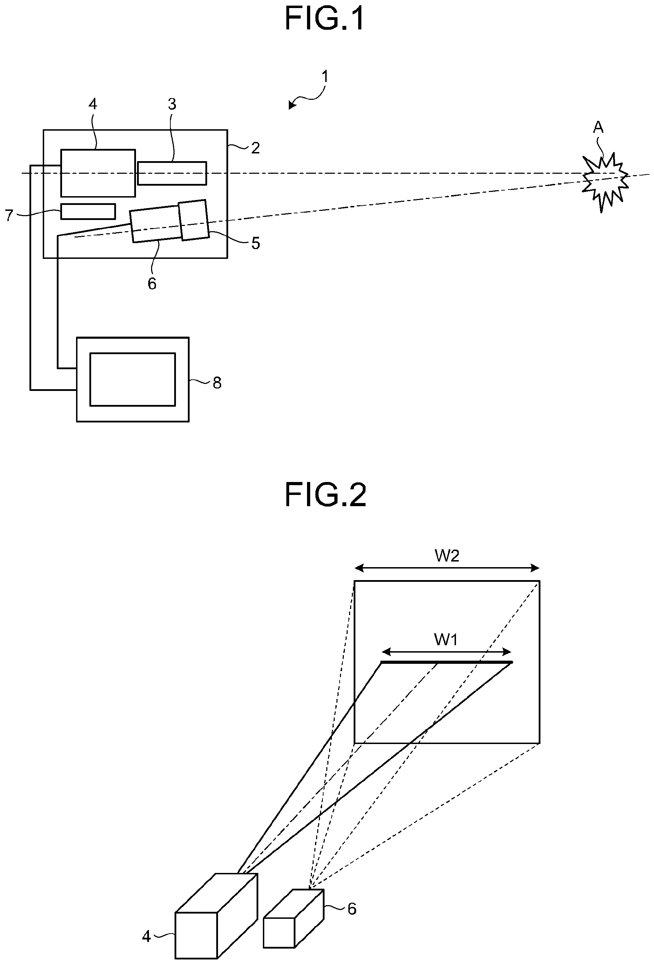

FIG. 1 is a schematic diagram illustrating the structure of the spectral characteristics measuring apparatus according to the embodiment of the present invention. FIG. 2 is a schematic diagram illustrating the relation between the width of a measuring field of view of an imaging spectral device 4 illustrated in FIG. 1 and the width of an imaging field of view of a two-dimensional imaging device 6 in a direction of the measuring field of view of the imaging spectral device 4. As illustrated in FIG. 1, a spectral characteristics measuring apparatus 1 according to the embodiment of the present invention is an apparatus for measuring spectral characteristics (spectral intensity) of an object A, for example, a furnace and a laser welded part, and is installed on a fixing plate 2 in this case. The spectral characteristics measuring apparatus 1 includes an imaging lens 3, the imaging spectral device 4, an imaging lens 5, the two-dimensional imaging device 6, and an calculation device 7.

The imaging spectral device 4 disperses light emitted from a linear region (one-dimensional region) of the object A or reflected light from the linear region, via the imaging lens 3, to acquire spectral characteristics, and outputs the acquired spectral characteristics to a display device 8.

The two-dimensional imaging device 6 is disposed so as to include the measuring field of view of the imaging spectral device 4 in accordance with the distance to the object A. The two-dimensional imaging device 6 captures, via the imaging lens 5, an image of a two-dimensional region of the object A that includes the linear region of which the imaging spectral device 4 acquires the spectral characteristics, and outputs the captured image to the display device 8. As illustrated in FIG. 2, a width W2 of the imaging field of the two-dimensional imaging device 6 is desirably made greater than a width W1 of the measuring field of view of the imaging spectral device 4. Thus, the measuring field of view of the imaging spectral device 4 can be checked completely with the captured image obtained by the two-dimensional imaging device 6.

At this time, the imaging spectral device 4 and the two-dimensional imaging device 6 are desirably arranged such that the direction of the measuring field of view of the imaging spectral device 4 and the capturing direction of the two-dimensional imaging device 6 are parallel to the installation surfaces of the imaging spectral device 4 and the two-dimensional imaging device 6, and that the center of the optical axis of the imaging spectral device 4 has the same height as the center of the optical axis of the two-dimensional imaging device 6 does from the respective installation surfaces.

Furthermore, the optical axes of the imaging spectral device 4 and the two-dimensional imaging device 6 are preferably as close to each other as possible, and more preferably substantially the same as each other. If the optical axes of the imaging spectral device 4 and the two-dimensional imaging device 6 are away from each other, it is hard to secure the correspondence between the measuring field of view of the imaging spectral device 4 and the imaging field of the two-dimensional imaging device 6, which will be described later. However, the calculation device 7, which will be described later, can correct the correspondence between the measuring field of view of the imaging spectral device 4 and the imaging field of the two-dimensional imaging device 6, which will be described later, in some cases.

The calculation device 7 determines the range of the object A on which two-dimensional information is to be acquired by the imaging spectral device 4, on the basis of the captured image obtained by the two-dimensional imaging device 6. The range of the object A on which two-dimensional information is to be acquired may be determined by a user on the basis of the image that has been output to the display device 8.

When the spectral characteristics measuring apparatus 1 having such a structure is used to measure spectral characteristics of the object A, the measuring field of view of the imaging spectral device 4 is first associated with the captured image that includes the object A and that has been taken by the two-dimensional imaging device 6. Specifically, the user disposes a point light source having the wavelength of which is known, at the same position as the distance to the object A, at one end of the measuring field of view of the imaging spectral device 4, and the two-dimensional imaging device 6 marks the point light source. Next, the fixing plate 2 is moved so that the point light source reaches at the other end of the measuring field of view of the imaging spectral device 4, and the two-dimensional imaging device 6 marks an image of the point light source. In this manner, positions of images of the point light source are marked that have been taken by the two-dimensional imaging device 6 when the images of the point light source were located at both ends of the measuring field of view of the imaging spectral device 4. Thus, the width W1 of the measuring field of view of the imaging spectral device 4 is determined, and the correspondence between the measuring field of view of the imaging spectral device 4 and the imaging field of the two-dimensional imaging device 6 is also defined, so that, even in a case in which the positional relation between the spectral characteristics measuring apparatus 1 and the object A is changed, the position of the object A is accurately associated with the measuring field of view, and spectral characteristics of the object A can be stably measured.

After the point light source is disposed at one end of the measuring field of view of the imaging spectral device 4 and marked by the two-dimensional imaging device 6, the point light source may be moved to the other end of the measuring field of view of the imaging spectral device 4, and the measuring field of view of the imaging spectral device 4 may be associated with the imaging field of the two-dimensional imaging device 6. Alternatively, a plurality of point light sources may be made available and disposed at both ends of the measuring field of view of the imaging spectral device 4, and the association described above may be established. Although the linear region of the object A is set within the measuring field of view of the imaging spectral device 4, the linear region may have the same width as the width W1 of the measuring field of view.

Next, spectral characteristics of the object A are measured using the imaging spectral device 4. On the basis of the captured image of the object A obtained by the two-dimensional imaging device 6 and the width W1 of the measuring field of view of the imaging spectral device 4, the calculation device 7 determines the range of measuring spectral characteristics. In a case in which the object A itself emits light, or in a case in which the object A reflects light from another light source, the present invention is also applicable. Basically, spectral characteristics can be measured at any given point in the linear region, but may be measured over the entire linear region. That is, measurement may be performed in the order from one end of the linear region to the other end of the linear region, for a predetermined length of time, at predetermined intervals, thereby obtaining one-dimensional spectral characteristics. Alternatively, a plurality of linear regions may be set to obtain two-dimensional spectral characteristics. Spectral characteristics can be measured at any given wavelength. One type of wavelength or a plurality of wavelengths may be used.

When spectral characteristics are being measured, the captured image obtained by the two-dimensional imaging device 6 is regularly checked, and in a case in which the position of the image of the object A is deviated from a straight line joining the two points that have been marked when the fields of view have been associated with each other, the position of the fixing plate 2 is corrected so as to locate the image of the object A on the straight line. Such changes can also be made as to couple the imaging spectral device 4 and the two-dimensional imaging device 6 to the same optical system in order to measure spectral characteristics, in other words, as to split a single optical axis using a half mirror or the like in order to measure spectral characteristics. In this case, the optical axes exactly coincide with each other, which makes the correspondence between the two fields of view more accurate.

Whether the position of the image of the object A is deviated from the straight line joining the two points that have been marked when the fields of view have been associated with each other can be judged from whether a spectral characteristic that has been measured by the imaging spectral device 4 is equal to or less than a preset threshold value, for example. Specifically, this applies to a case in which the spectral intensity is equal to or less than the preset threshold value, for example. Alternatively, for correcting the position of the image of the object A, other measures may be used, other than correcting the position of the fixing plate 2.

In this manner, in the spectral characteristics measuring apparatus 1 according to the embodiment of the present invention, in order to measure spectral characteristics by using the imaging spectral device 4, the two-dimensional imaging device 6 is also provided in addition that has the two-dimensional imaging field including the one-dimensional measuring field of view of the imaging spectral device 4, to perform measurement simultaneously, so that a deviation of the object A from the measuring field of view is detected as an image, and thereby the measuring field of view can be corrected.

Thus, even in a case in which the positional relation between the object A and a direction substantially perpendicular to the optical axis of the imaging spectral device 4 is changed, the position of the object A is accurately associated with the measuring field of view, and thereby spectral characteristics of the object A can be stably measured. Additionally, because the distance between the object A and the imaging spectral device 4 is grasped in advance to perform measurement, spectral characteristics of the object A can be stably measured regardless of the distance to the object A. In this regard, the effect is exerted particularly when the distance between the object A and the spectral characteristics measuring apparatus 1 is roughly equal to or greater than 15 m. For this reason, the spectral characteristics measuring apparatus 1 is particularly suitable for a case in which the object A is a dangerous article, for example, a furnace because the spectral characteristics can be stably measured without approaching the object A. The upper limit of the distance to the object A depends on performance of the imaging spectral device 4, the two-dimensional imaging device 6, and the imaging lenses 3, 5 used in the spectral characteristics measuring apparatus 1. Consequently, the distance to the object is practically to be equal to or less than 50 m. The object to be measure is easily distinguished from disturbing matter, so that the reliability of measurement results can also be increased. Examples

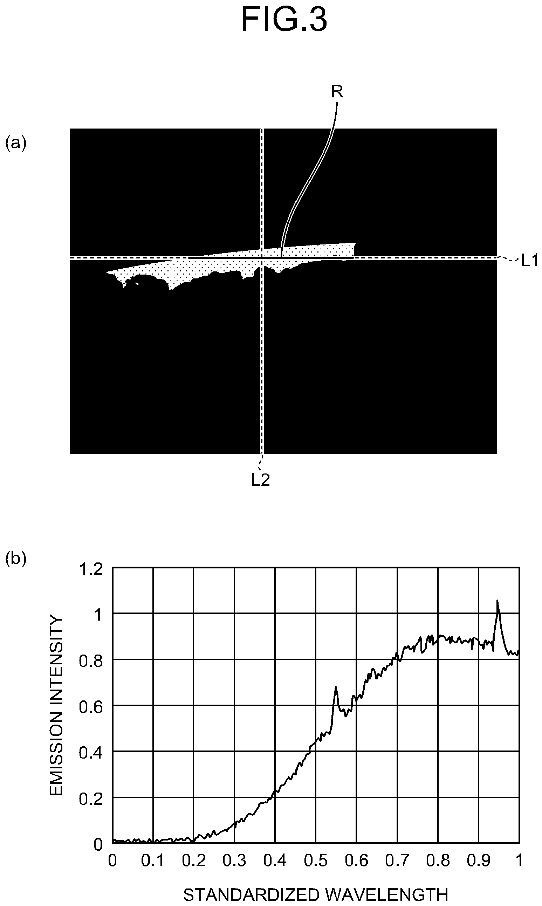

In the present example, the spectral characteristics measuring apparatus 1 illustrated in FIG. 1 was used to measure spectral characteristics of flames coming from a smelting furnace in a steelmaking plant. The distance from the spectral characteristics measuring apparatus 1 to the smelting furnace was set at about 20 m for safety and in order to protect the apparatus from sparks or a spray of molten steel. FIGS. 3(a), (b) are diagrams illustrating a captured image obtained by the two-dimensional imaging device 6 and spectral intensity (emission intensity) measured by the imaging spectral device 4, respectively, when the measurement of spectral characteristics is started. The flames correspond to the portion hatched in FIG. 3(a). In the drawing, a broken line L1 indicates the observation line of the imaging spectral device 4, and a broken line L2 indicates the measuring position of the spectrum. In other words, spectral characteristics of the intersection point of the broken line L1 and the broken line L2 are measured. Additionally, in this example, the aforementioned linear region was a portion R where the portion hatched in FIG. 3(a) and the broken line L1 overlap each other.

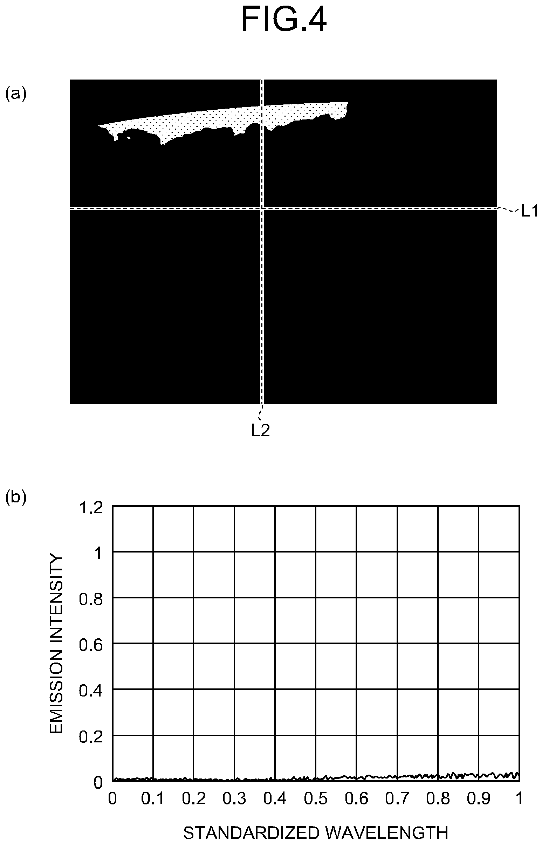

As illustrated in FIG. 3(a), (b), when measurement of spectral characteristics was started, the measuring field of view of the imaging spectral device 4 included the flames coming from the smelting furnace, which made possible to measure the spectrum of the flames. However, as operation of the smelting furnace proceeded, the position at which the flames were generated was changed in the height direction, so that, even though the flames were being generated, the position of the flames fell outside the measuring field of view of the imaging spectral device 4, thereby decreasing the spectral intensity of the flames, as illustrated in FIG. 4(a), (b).

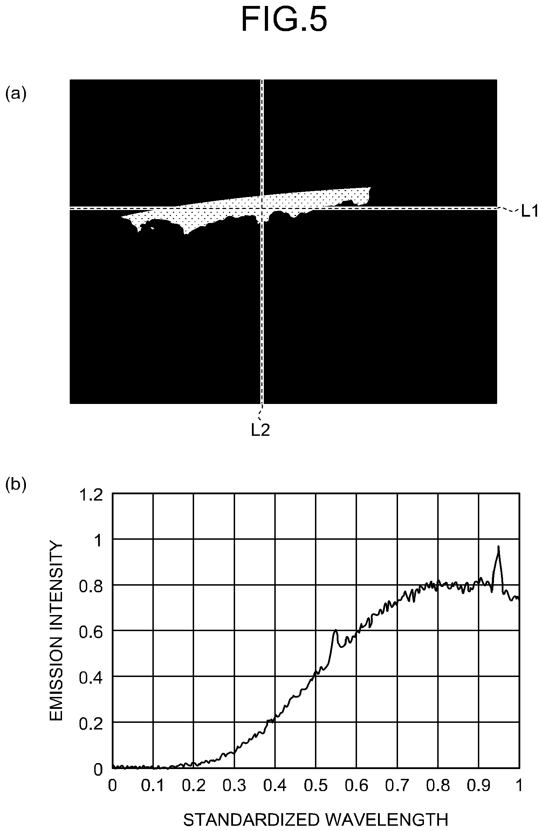

The position of the measuring field of view of the imaging spectral device 4 in the height direction was then corrected on the basis of the captured image obtained by the two-dimensional imaging device 6. As a result, the position of the flames fell within the measuring field of view of the imaging spectral device 4, as illustrated in FIG. 5(a), (b), and the spectrum of the flames was properly acquired. With such a structure, even in a case in which the positional relation to the flames is changed, spectral characteristics of the flames, in other words, the combustion state of the smelting furnace can be stably measured, and the state of the smelting furnace can be stably controlled on the basis of measurement results. In this example, the case has been illustrated in which the spectral characteristics were measured on the intersection point of the broken line L1 and the broken line L2, while, needless to say, the broken line L2 may be set freely as long as it is within the range of the linear region.

Next, a case will be illustrated in which the spectral characteristics measuring apparatus and the spectral characteristics measuring method according to the present invention were applied to operation of a converter and the furnace was controlled.

A top-blown rotary converter (top blowing of oxygen gas, bottom blowing of argon gas) having a capacity of 300 t was used to perform oxidation refining of molten iron for dephosphorization and decarburization. A top-blown lance was used in which convergent-divergent nozzles were evenly spaced on the same circumference. The nozzles having a throat diameter of 73.6 mm, an outlet diameter of 78.0 mm, five holes, and an inclination angle of 15° were used. The distance between the spectral characteristics measuring apparatus 1 and the converter was about 20 m.

Iron scrap was first charged into the converter, and then molten iron having the components and the temperature disclosed in Table 1 below was charged. Subsequently, argon gas was sprayed through a bottom-blown tuyere on the bath surface of the molten iron, and oxygen gas through the top-blown lance, and oxidation refining of the molten iron was started. The charging amount of the iron scrap was adjusted so that the molten steel temperature would be 1650°C after the oxidation refining was finished. Subsequently, burnt lime was charged as a CaO-based solvent during the oxygen refining, and the oxidation refining was performed until the carbon concentration in the molten iron reached 0.05 percentage by mass. The charging amount of the lime was adjusted so that the basicity of slag generated in the furnace was 2.5.

During oxygen blowing, combustion flames near the furnace nose of the converter was captured at predetermined measurement time intervals $\Delta t$ of 1 to 10 seconds by the spectral characteristics measuring apparatus 1, and an analysis was performed to calculate emission intensity In of light at wavelength of 610 nm. Herein, wavelength of 610 nm is a value determined by a previous examination, and in a case in which the steel grade, operating condition, or furnace shape is different, or in a case in which the spectral characteristics measuring apparatus and the spectral characteristics measuring method according to the present invention are applied to facilities other than the converter, for example, a smelting pan, the wavelength is desirably determined each time. The obtained emission intensity In at wavelength of 610 nm at each point in time was used to calculate the change rate of moving average of the emission intensity expressed by the following expressions (1), (2).

CHANGE RATE OF MOVING AVERAGE OF EMISSION INTENSITY

$$= \{I(n,s) - I(n-m,s)\}/[\{I(n,s) + I(n-m,s)\}/2] \qquad (1)$$

$$I(n,s) = \sum_{i=0}^{s-1} I_{n-I} \qquad (2)$$

Herein, in the expressions (1), (2), I(n,s) is a moving average (a.u.) of the emission intensity at specific wavelength with time n as a reference, where a countable is s, and I(n-m,s) is a moving average (a.u.) of the specific wavelength with $m \times \Delta t$ seconds before the time n as a reference, where a countable is s. Also, m is a natural number, s is a countable of the moving average (an integer equal to or greater than zero), and $\Delta t$ is a measurement time interval (s).

The obtained change rate of moving average of the emission intensity at each point in time was used as an indicator of the state inside the converter, and operation of the converter was monitored. At a point in time when the obtained change rate of moving average of the emission intensity fell below a predetermined threshold value of 1.6, at least one of the flow rate of oxygen gas through the top-blown lance, the lance height of the top-blown lance, and the flow rate of bottom blowing gas was adjusted. Furthermore, each time the emission intensity at the specific wavelength during blowing was decreased, the field of view was adjusted in the examples.

Specifically, the flow rate of oxygen gas through the top-blown lance was decreased from 1000 Nm³/min to 833 Nm³/min, the lance height was lowered from 3.0 m to 2.5 m, and the flow rate of bottom blowing gas was increased from 15 Nm³/min to 30 Nm³/min. The execution rate in Table 2 refers to a percentage of charging for which spectrometry of the combustion flames near the furnace nose was stably performed for the total number of blowing. For blowing for which spectrometry of the flames was unable to be stably performed, in other words, when the change rate of moving average of the emission intensity did not satisfy the expression (2), the top blowing and bottom blowing conditions described above were adjusted, on the basis of calculation of hot matter performed by an existing process computer, at a point in time when the carbon concentration in the molten iron was estimated at 0.45 percentage by mass.

As comparative examples, levels are indicated at which the top blowing and bottom blowing conditions described above were adjusted, on the basis of calculation of hot matter performed by the existing process computer, at a point in time when the carbon concentration in the molten iron was estimated at 0.45 percentage by mass, regardless of the level at which the field of view of spectrometry was not adjusted and a change in the emission intensity.

As disclosed in Table 2, in all of the examples, the total content of iron in the slag is less than that in the comparative examples, and the iron yield was improved. In the examples and the comparative examples, the refining time was substantially the same, and the productivity was substantially equal. Thus, it became evident that, by applying the present invention, the operating condition of the converter was optimized.

Table 1

| Chemical components of molten iron (percentage by mass) | | | | | | | Molten iron temperature (°C) |
|---|---|---|---|---|---|---|---|
| C | Si | Mn | P | S | Cr | Fe | |
| 4.3 to 4.7 | 0.32 to 0.43 | 0.16 to 0.27 | 0.112 to 0.126 | 0.003 to 0.016 | tr | Bal. | 1260 to 1280 |

Table 2

| Level | Specific wavelength nm | Change of top and bottom blowing conditions | | | Field of view adjusted | Blowing time min. | Execution rate % | Total content of iron in slag when decarburization refining is finished (T. Fe) mass% | Remarks |
|---|---|---|---|---|---|---|---|---|---|
| | | Flow rate of top blowing | Lance height | Flow rate of bottom blowing | | | | | |
| 1 | 610 | ○ | ○ | ○ | Yes | 12.3 | 90 | 21.7 | Example |
| 2 | 610 | ○ | ○ | × | Yes | 12.3 | 92 | 22.3 | Example |
| 3 | 610 | × | × | ○ | Yes | 12.2 | 91 | 22.4 | Example |
| 4 | 610 | ○ | ○ | ○ | No | 12.3 | 76 | 23.3 | Comparative example |
| 5 | 610 | ○ | ○ | × | No | 12.2 | 72 | 22.9 | Comparative example |
| 6 | 610 | × | × | ○ | No | 12.3 | 77 | 22.9 | Comparative example |
| 7 | - | ○ | ○ | ○ | - | 12.2 | - | 24.3 | Comparative example |
| 8 | - | ○ | ○ | × | - | 12.4 | - | 25.3 | Comparative example |
| 9 | - | × | × | ○ | - | 12.2 | - | 25.0 | Comparative example |

# EP 3 760 991 B1

Industrial Applicability

According to the present invention, a spectral characteristics measuring apparatus and a spectral characteristics measuring method can be provided that are able to stably measure spectral characteristics of the object, even in a case in which the positional relation to an object changes, by accurately associating the position of the object with the measuring field of view.

Reference Signs List

| | |
|---|---|
| 1 | spectral characteristics measuring apparatus |
| 2 | fixing plate |
| 3, 5 | imaging lens |
| 4 | imaging spectral device |
| 6 | two-dimensional imaging device |
| 7 | calculation device |
| 8 | display device |
| A | object |

## Claims

1. A furnace control method comprising a step of controlling including:
   measuring a combustion state of a furnace by measuring the spectral information of the furnace by using a spectral characteristics measuring method comprising:

   a step of acquiring spectral information, by using an imaging spectral device (4) comprising an imaging lens (3, 5), the spectral imaging device being configured to disperse light emitted from a linear region of an object or reflected light from the linear region, via the imaging lens (3,5);
   a step of capturing an image of a two-dimensional region of the object, the two-dimensional region including the linear region, by using a two-dimensional imaging device (6);
   a step of determining a range on which the spectral information is to be acquired by the imaging spectral device (4) based on the image captured by the two-dimensional imaging device (6) by associating a measuring field of view of said imaging spectral device (4) with said image captured by the two-dimensional imaging device (6), the furnace control method further comprising controlling the combustion state of the furnace, based on the measured combustion state of the furnace.

## Patentansprüche

1. Ofensteuerungsverfahren, umfassend einen Steuerschritt, der folgendes einschließt:
   Messen eines Verbrennungszustandes eines Ofens durch Messen der Spektralinformationen des Ofens unter Verwendung eines Verfahrens zum Messen von Spektraleigenschaften, umfassend:

   einen Schritt des Erhaltens von Spektralinformationen unter Verwendung einer spektralen Bildgebungsvorrichtung (4), die eine Bildgebungslinse (3, 5) umfasst, wobei die spektrale Bildgebungsvorrichtung konfiguriert ist, um von einem linearen Bereich eines Gegenstands ausgesendetes Licht oder von dem linearen Bereich reflektiertes Licht über die Bildgebungslinse (3, 5) zu streuen;
   einen Schritt des Erfassens eines Bildes eines zweidimensionalen Bereichs des Gegenstands, wobei der zweidimensionale Bereich den linearen Bereich einschließt, unter Verwendung einer zweidimensionalen Bildgebungsvorrichtung (6);
   einen Schritt des Bestimmens eines Bereichs, in welchem die Spektralinformationen von der spektralen Bildgebungsvorrichtung (4) basierend auf dem von der zweidimensionalen Bildgebungsvorrichtung (6) aufgenommenen Bild zu erhalten sind, durch Zuordnen eines Messsichtfelds der spektralen Bildgebungsvorrichtung (4) zu dem von der zweidimensionalen Bildgebungsvorrichtung (6) aufgenommenen Bild,
   wobei das Ofensteuerungsverfahren weiter das Steuern des Verbrennungszustands des Ofens auf der Grundlage des gemessenen Verbrennungszustands des Ofens umfasst.

**EP 3 760 991 B1**

**Revendications**

1. Procédé de commande de four comprenant une étape de commande incluant :
une mesure d'un état de combustion d'un four en mesurant les informations spectrales du four en utilisant un procédé de mesure de caractéristiques spectrales comprenant :

une étape d'acquisition d'informations spectrales, en utilisant un dispositif spectral d'imagerie (4) comprenant une lentille d'imagerie (3, 5), le dispositif d'imagerie spectral étant configuré pour disperser de la lumière émise depuis une région linéaire d'un objet ou de la lumière réfléchie depuis la région linéaire, via la lentille d'imagerie (3, 5) ;
une étape de capture d'une image d'une région bidimensionnelle de l'objet, la région bidimensionnelle incluant la région linéaire, en utilisant un dispositif d'imagerie bidimensionnelle (6) ;
une étape de détermination d'une plage sur laquelle les informations spectrales doivent être acquises par le dispositif spectral d'imagerie (4) sur la base de l'image capturée par le dispositif d'imagerie bidimensionnelle (6) en associant un champ de vision de mesure dudit dispositif spectral d'imagerie (4) à ladite image capturée par le dispositif d'imagerie bidimensionnelle (6),
le procédé de commande de four comprenant en outre une commande de l'état de combustion du four, sur la base de l'état de combustion mesuré du four.

# FIG.1

# FIG.2

# FIG.3

(a)

(b)

# FIG.4

(a)

L1

L2

(b)

# FIG.5

(a)

L1

L2

(b)

STANDARDIZED WAVELENGTH

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008139062 A
- JP 2000356552 A
- US 20090065695 A1
- WO 2017093431 A1

**Non-patent literature cited in the description**

- *the hyperspectral camera equipped with a spectral filter,* 15 January 2018, https://www.argo-corp.com/cam/special/IMEC/IMEC_snapshot.htm I
- *the imaging spectroscope, ImSpector,* 15 January 2018, http://www.daitron.co.jp/products/category/?c=zoom&pk=1942& sw=1